# EUROPEAN PATENT SPECIFICATION

(11) **EP 3 954 985 B1**
(45) Date of publication and mention of the grant of the patent: **07.10.2026**
(21) Application number: 21187051.4
(22) Date of filing: 21.07.2021
(51) Int. Cl.: G06N 3/09, G01N 23/046, G06N 3/0464, G06N 3/08, G06T 7/00, G06T 7/62, G06T 7/11

(54) **INDUSTRIAL TOMOGRAPHY APPARATUS AND METHOD FOR CHECKING THE COMPOSITION OF INDUSTRIAL PRODUCTS WHICH COMPRISE A PLURALITY OF PRIMARY PARTS**
INDUSTRIELLE TOMOGRAFIEVORRICHTUNG UND VERFAHREN ZUR ÜBERPRÜFUNG DER ZUSAMMENSETZUNG INDUSTRIELLER PRODUKTE, DIE EINE VIELZAHL VON PRIMÄRTEILEN ENTHALTEN
APPAREIL DE TOMOGRAPHIE INDUSTRIEL ET PROCÉDÉ DE CONTRÔLE DE LA COMPOSITION DE PRODUITS INDUSTRIELS DOTÉS D'UNE PLURALITÉ DE PIÈCES PRIMAIRES

(30) Priority: 04.08.2020 IT 202000019243
(43) Date of publication of application: 16.02.2022
(73) Proprietor: Biometic S.r.l., 39042 Bressanone (BZ) (IT)
(72) Inventor: GIUDICEANDREA, Arianna, 39042 Bressanone (Bolzano) (IT); URSELLA, Enrico, 30174 Mestre (Venezia) (IT); ZANE, Giancarlo, 30173 Mestre (Venezia) (IT)
(74) Representative: Ponchiroli, Simone

(56) References cited:
- EP-A1- 2 405 260
- WO-A1-97/18462
- US-A1- 2018 113 083
- US-A1- 2019 325 570
- US-B2- 10 481 108
- HINDELANG FLORINE ET AL: "Micro Computer Tomography for medical device and pharmaceutical packaging analysis", JOURNAL OF PHARMACEUTICAL AND BIOMEDICAL ANALYSIS, ELSEVIER B.V, AMSTERDAM, NL, vol. 108, 9 February 2015 (2015-02-09), pages 38 - 48, XP029202651, ISSN: 0731-7085, DOI: 10.1016/J.JPBA.2015.01.045
- KRUTH J P ET AL: "Computed tomography for dimensional metrology", CIRP ANNALS, vol. 60, no. 2, 31 December 2011 (2011-12-31), pages 821 - 842, XP028262022, ISSN: 0007-8506, [retrieved on 20110603], DOI: 10.1016/J.CIRP.2011.05.006

## Description

This invention relates to an industrial tomography apparatus and a method for checking the composition of industrial products which comprise a plurality of primary parts.

In the context of this invention, the definition industrial product is used to identify any product which is industrially made and/or packaged. One of the preferred fields of application is the food sector, but this invention may be applied in the most diverse sectors, as will be clear from the following description.

The definition product which comprises a plurality of primary parts means any product in which parts are identifiable which, at macroscopic level, are distinct and distinguishable from each other. For example such parts may have different composition, and/or different shape, and/or different dimensions. Again by way of example, the various primary parts may be in contact with each other or separate from each other, and they may or may not adhere to each other. Each primary part may or may not have a predetermined shape, and may be solid, liquid or in the form of a gel.

In some applications of this invention, the product is composed of primary parts which are (or rather, should be) assembled in a predetermined way, that is to say, positioned and/or connected in a predetermined way relative to each other.

A first possible example is that of a tub of ice cream in which, theoretically, there must be a predetermined number of pieces of chocolate mixed with the ice cream, and in which those pieces must be of a predetermined size and must be evenly distributed in the ice cream.

A second possible example is that of a cake which, theoretically, must have cherries at predetermined positions, as well as the correct quantity of sponge cake and cream, alternating in the correct way.

Similar considerations apply for pizzas, snacks, single-portion packaged ice creams and so on.

The same assessments may even apply for foods packaged in a preserving liquid, such as peeled tomatoes, mozzarella cheeses, pickles, etc.

Again in the context of the first possible application of this invention, in a non-food sector the products which may be affected are even more varied: they may range from a fountain pen to a vacuum cleaner, etc.

In a second application of this invention, the product is composed of primary parts which are not assembled, but which are (or rather, should be) present in predetermined quantities.

In the food sector these may be, for example, a bag containing a dried fruit and nut mix which must contain a correct quantity of each type of fruit and nut, or a packet of mixed biscuits. The same applies in the case of a bag of muesli. In contrast, in the non-food sector they could be, for example, a bag of screws and nuts, a bag of hardware for furniture to be assembled, a packet of toy building blocks such as Lego^{®} bricks, etc.

In other applications of this invention, in contrast the primary parts may all be the same as each other, for example in the case of a pack of pasta, a pack of crackers, a pack of crispbreads, a packet of plastic components for furniture factories, etc.

As already indicated, for many products constituted of primary parts, there may be requirements to be met during the production/packaging step in order to be able to best satisfy the demands of customers and the company.

In some cases, it is important that the product comprises all of the various primary parts in the correct position, with the correct dimensions and with the correct quantities and/or distribution. Few pieces of chocolate in the ice cream may leave the customer unsatisfied, whilst too many pieces of chocolate may involve a cost that is too high for the company. Similarly, in the case of a cake, if the cherries used to garnish it are covered by the cream, the appearance of the cake is compromised, as it is if there are extra cherries in wrong positions. In contrast, in some cases it is only important that the product comprises precisely the parts which it must contain; not fewer parts (to avoid making the customer unhappy), nor extra parts (which would simply be a waste from the viewpoint of the company). Consider for example a bag of screws and nuts, a bag of hardware for furniture to be assembled, building blocks, etc.

In other cases, in contrast what is important is to guarantee the integrity of the various parts of which the product consists; for example it is important to ascertain if a pack of crispbreads contains broken crispbreads, just as it is important to ascertain if all of the blocks of a game, or a set of components for furniture, are intact.

Although the problems indicated above have been known and experienced for a very long time, until now companies have been able to face them by simply attempting to increasingly improve the production lines with the aim of minimising the occurrence of unwanted production/packaging errors. Furthermore, sampling checks have been proposed, to verify products a posteriori in a statistical way and to understand which interventions should be performed on the production plants if necessary.

In contrast, as far as the Applicant is aware, until now on the market there are no known methods or apparatuses for checking a posteriori in an effective and systematic way the entire production of industrial products comprising a plurality of primary parts, with the aim of identifying any products which do not meet the expected requirements.

Document WO 97/18462 discloses an apparatus and a method for detecting concealed objects and features thereof, such as contraband in baggage or defects in articles of manufacture, using multiple energy computed tomography. The apparatus uses multiple energy x-ray scanning to identify targets with a spectral response corresponding to a known response of targets of interest. Detection sensitivity for both automatic detection and manual inspection are improved through the multiple-energy, multispectral technique. Multichannel processing is used to achieve high throughput capability. Target identification may be verified through further analysis of such attributes as shape, texture, and context of the scan data. A radiograph, CT image, or both may be reconstructed and displayed on a computer monitor for visual analysis by an operator. Finally, the apparatus may receive and store input from the operator for use in subsequent target identification. Neither WO 97/18462 discloses any method or apparatus for checking a posteriori in an effective and systematic way the entire production of industrial products comprising a plurality of primary parts, with the aim of identifying any products which do not meet expected requirements.

The document "Micro Computer Tomography for medical device and pharmaceutical packaging analysis" (Hindelang F. et Al) discloses the use of micro computed tomography to reconstruct a virtual three-dimensional voxel model of a product and, by means of segmentation based on the density of the voxels, to perform non-destructive verification of integrity, measurements and defect detection of medical devices and pharmaceutical packaging.

In this context, the technical purpose which forms the basis of this invention is to overcome the above-mentioned disadvantages.

In particular, the technical purpose of this invention is to make an apparatus and provide a method for checking the composition of industrial products which comprise a plurality of primary parts.

It is also the technical purpose of this invention to make an apparatus and to provide a method for checking the composition of industrial products, which allow verification with good precision, of the correct positioning relative to each other of the various primary parts and/or the correct quantity of each type of primary parts and/or the integrity of the various primary parts and/or the presence of the correct primary parts and/or the absence of element which are not expected.

The technical purpose specified and the aims indicated are substantially achieved by an industrial tomography apparatus and a method for checking the composition of industrial products which comprise a plurality of primary parts, as described in the appended claims.

Further features and the advantages of this invention are more apparent in the detailed description, with reference to the accompanying drawings which illustrate several preferred, non-limiting embodiments, in which:
- Figure 1 shows a virtual three-dimensional tomography model of a product constituted of a single-portion tub of ice cream;
- Figures 2 to 5 show four different segmentations of the virtual three-dimensional tomography model of Figure 1;
- Figure 6 shows an axial section of the virtual three-dimensional tomography model of Figure 1;
- Figure 7 shows a segmentation of the image of Figure 6;
- Figure 8 shows a plan view of a virtual three-dimensional tomography model of a pack of crispbreads;
- Figure 9 shows a front view of a virtual three-dimensional tomography model of a broken crispbread;
- Figure 10 highlights the presence of a breakage zone in the virtual three-dimensional tomography model of Figure 9;
- Figure 11 shows a front view of a virtual three-dimensional tomography model of an intact crispbread;
- Figure 12 shows an axial section of a virtual three-dimensional tomography model of a packet of mixed dried fruit and nuts;
- Figure 13 shows the same model as Figure 12, segmented to identify a plurality of different fruit and nuts of which it is constituted;
- Figure 14 shows an in line version of the tomography apparatus according to this invention;
- Figures 15 and 16 show two layouts of industrial plants which comprise a tomography apparatus according to this invention.

The following is a description initially of an industrial tomography apparatus made according to this invention and then of the method according to this invention. In any case, since the apparatus is capable of implementing the method according to this invention, what will be described relative to the tomography apparatus shall be understood to also apply for the method, and vice versa, if technically compatible. In fact, it shall be understood that particular embodiments of the apparatus will be capable of implementing only specific embodiments of the method, and that particular embodiments of the method can be implemented exclusively by specific embodiments of the apparatus.

The industrial tomography apparatus 1 according to this invention is a tomography apparatus specifically intended for analysing one or more products 2 of known type, and in particular products 2 of known type which comprise (and at least in some cases are constituted of) a plurality of primary parts. Such products 2 of known type, hereinafter referred to simply as "products", have known features, both as a whole (for example: overall size, list of primary parts of which they are composed), and as regards the individual primary parts of which they are composed (for example: number and/or volume of each type of primary part, position of the parts relative to each other, dimensions of each primary part)

In any case, it should be noticed that, in the context of this invention, when reference is made to known features of the products 2 the intention is to refer to the theoretical features which the products 2 should have, that is to say, to the features of products 2 which reflect the production and/or packaging specifications. In contrast, as will be seen below, what this invention allows is a true verification, on the finished product 2, of whether or not said specifications are met.

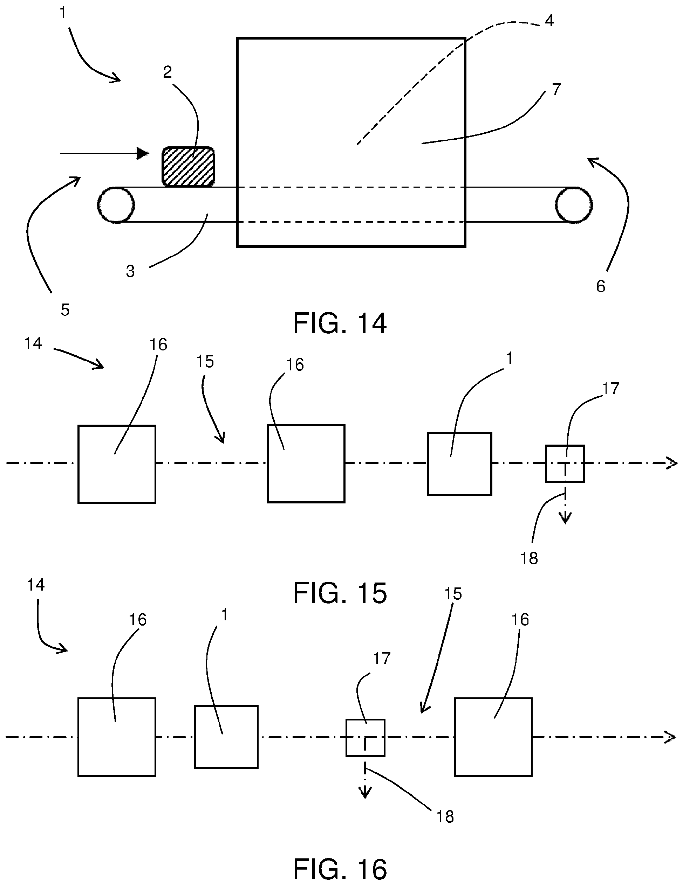

The apparatus comprises first a conveying device 3 which is configured to feed the products 2 to be examined to a scanning zone 4, and then to remove the products 2 from the scanning zone 4. Advantageously, the conveying device 3 moves in one direction from an infeed zone 5 to an outfeed zone 6 (Figure 14), through the scanning zone 4.

At the scanning zone 4 there is a tomography scan device 7, which is configured to perform tomography scans of what is located in the scanning zone 4 and, in particular, of the industrial products 2 of interest. In the known way, the tomography scan device 7 comprises an x-ray emitter and an x-ray detector (which are not illustrated) placed on opposite sides of the scanning zone 4, and a movement system (also not illustrated) for making the product 2 rotate relative to the emitter and receiver (preferred solution) or vice versa. Since these are technical solutions known to experts in the sector, they will not be described in detail herein.

The tomography apparatus 1 also comprises an electronic processing unit (not illustrated) which is operatively connected to the tomography scan device 7, for receiving from it digital data about the tomography scans performed by the tomography scan device 7, from different relative angles relative to the object.

The electronic processing unit is programmed, in the known way, to use the digital data to generate a virtual three-dimensional tomography model (in electronic format) of each product 2 scanned by the tomography scan device 7. In an equally known way, the virtual three-dimensional tomography model 8 is constituted of a plurality of voxels (primary volumes), each of which is assumed to have its own constant density. Therefore, in the known way, associated with each voxel there is a value which is representative of the density of the voxel (CT Number). It should be noticed that the CT Number does not express the density in g/dm³, but the value in g/dm³ may generally be calculated provided that one knows the material of which the voxel is composed (for example chocolate, iron, etc.); in fact, for that purpose there are specific known beam-hardening correction algorithms (for example, see what is described in Cao, Wenchao, et al. "An improved segmentation method for multi-material beam hardening correction in industrial x-ray computed tomography." Measurement Science and Technology 30.12 (2019): 125403). In this way it is possible to use the system even for calculating the weight/the mass of the individual voxels if their volume is known. Hereinafter when reference is made to the mass of groups of voxels, it will be possible to calculate it in this way or, more simply, since they are products with known features, even by multiplying the volume of the voxels by a known average density value for that specific primary part of the product 2. It will be possible to select the dimensions of the voxels based on the dimensions of the product 2 to be examined; in general they will be small enough to allow the obtainment of a sufficiently detailed and precise reconstruction. The virtual three-dimensional tomography model 8 is then advantageously saved in an electronic memory associated with the electronic processing unit.

According to a first innovative aspect of this invention, the electronic processing unit is also programmed to perform a procedure for examining the composition of the products 2 of known type to which the industrial tomography apparatus 1 is dedicated.

In particular, during the examination procedure performed by it, the electronic processing unit examines the virtual three-dimensional tomography model 8 of each product 2, to assess predetermined properties of the primary parts of the product 2.

In the context of this invention, predetermined properties means one or more properties set during the step of programming the electronic processing unit. Those predetermined properties may for example be dimensions, volumes, positions, etc.

In the invention the electronic processing unit assesses at least one of the following predetermined properties:
- the position of one or more primary parts inside the product 2. Some examples of this type are: the correct positioning of parts of assembled complex products 2; the position of garnishing cherries on cakes or ice creams;
   and
- the total number of primary parts of a same type inside the product 2. Some examples of this type are: the number of nuts or screws inside a bag; the number of each type of component in a bag of hardware for furniture to be assembled; the number of each type of blocks inside a box of toy blocks.

Further predetermined properties which could be assessed are:
- the dimensions of one or more primary parts. Some examples of this type are: the thickness of a layer of a cake; the dimensions of the pieces of chocolate distributed in an ice cream;
- the shape of one or more primary parts. Some examples of this type are: the shape of screws and nuts, the shape of toy blocks, the shape of biscuits inside a pack, the shape of a top garnish of an ice cream.
- the volume or the mass of one or more primary parts. Some examples of this type are: the volume/the mass of solid food preserved in a preserving liquid, the quantity of syrup in a single- or multi-portion tub of ice cream;
- the total volume or mass of primary parts of a same type inside the product 2. Some examples of this type are: the total volume or mass of chocolate present in a tub of ice cream; the total volume or mass of each type of dried fruit and nuts in a bag of mixed dried fruit and nuts.
- the integrity of one or more primary parts relative to a predetermined shape which said one or more primary parts should have. Some examples of this type are: the integrity of crispbreads, crackers or biscuits; the integrity of plastic components;
- the presence, in predetermined zones of the product 2, of densities which are different from an expected density, which indicate the presence of unwanted elements or of unexpected empty zones (for example due to breakage of a primary part, for example a crispbread);
- the presence of primary parts which are not expected for the product 2, which indicate the presence of extra primary parts or of extraneous elements (this specific case is similar to the preceding one).

In some embodiments, the examination procedure which the electronic processing unit is programmed to perform for each product 2 of known type, comprises a sequence of operating steps programmed in the electronic processing unit. The most general solution in particular comprises a segmentation step, an assessment step, a comparison step and a classification step.

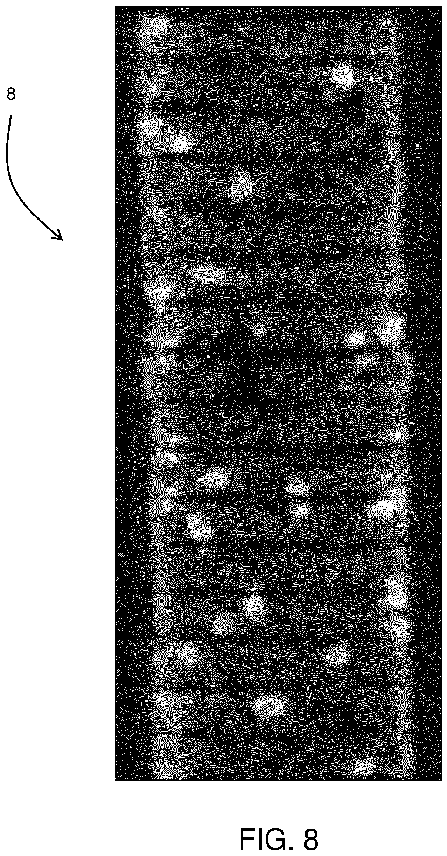

When it performs the segmentation step, the electronic processing unit identifies in the virtual three-dimensional tomography model 8 a plurality of primary volumes 9 (also obviously virtual) which each correspond to one of the primary parts which constitute the real product 2. Each primary volume 9 is constituted of voxels of the virtual three-dimensional tomography model 8, which are adjacent to each other and which have respective densities inside a same predetermined range of densities. Since the nature and the composition of the primary parts of each product 2 are known beforehand, each range of densities will be selected, during the step of programming the electronic processing unit, in such a way as to correspond to the average density of a specific primary part with a predetermined tolerance (for example, average density ± 5%), that is to say, in such a way as to correspond to a known range of densities of one of the primary parts which constitute the product 2. Alternatively, each range of densities may even be selected by directly processing the image (for example starting from an average value of either densities of the primary parts or density of the air - see the discussion of Figure 8 below).

Even the information about each primary volume 9 identified may then be saved.

**In** some embodiments, during the segmentation step, the electronic processing unit identifies a primary volume 9 by simply selecting, for that primary volume 9, all of the adjacent voxels which have densities inside the relative predetermined range of densities. This is possible in all cases in which, according to the known features of the product 2, it is known beforehand that said specific primary part is always constituted of a single volume (for example: the ice cream in which the pieces of chocolate are distributed or the container which contains the other primary parts of the product 2).

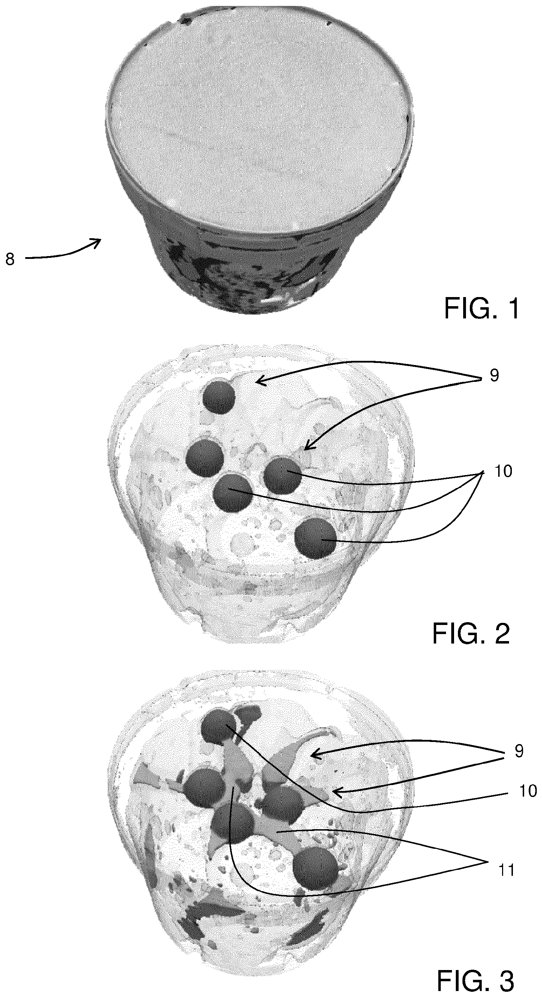

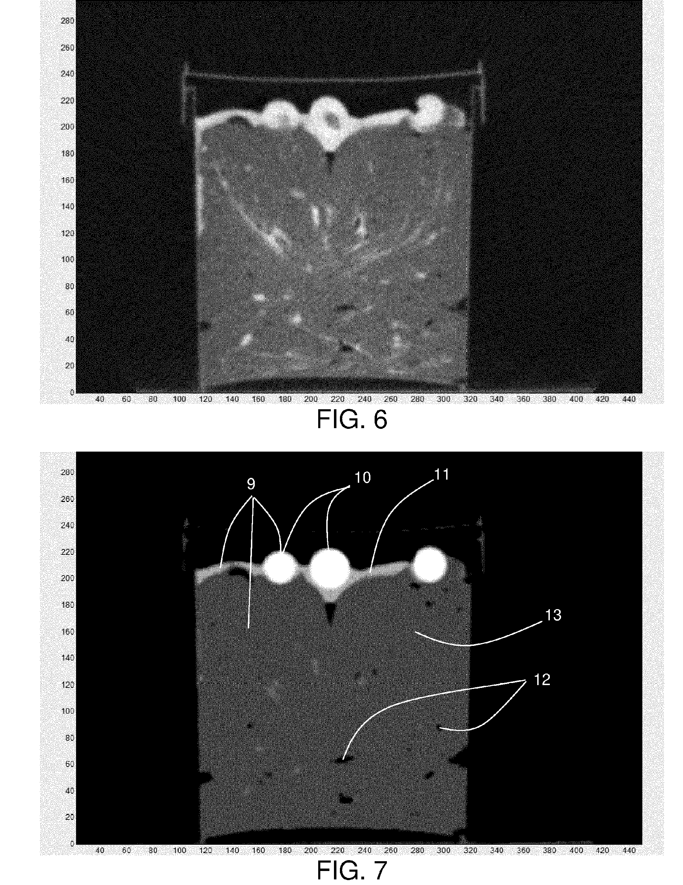

In contrast, in other embodiments, the segmentation step performed as just described does not allow direct identification of the individual primary volume 9; that applies in particular when multiple primary parts of a same type in contact with each other are present, or when distinct primary parts are present, but with very similar densities. In these cases, performing the segmentation step comprises first the electronic processing unit selecting all adjacent voxels which have densities inside the expected predetermined range of densities, according to the methods described above, thereby identifying a secondary volume which will be known to be constituted of a plurality of primary volumes 9. Then the electronic processing unit divides the secondary volume into the plurality of primary volumes 9 of which it is constituted, for that purpose using information saved about known aspects of the primary parts to which the primary volumes 9 must correspond. Such known aspects may be the shape, the dimensions or the position of the primary parts inside the product 2. For example, in the case of an ice cream garnished on top with sour black cherry syrup (like that in Figures 1 to 5), since the sour black cherries may be in contact with each other and may be partly immersed in the syrup, and since the syrup has a density very similar to the sour black cherries (see Figure 6), in order to identify the sour black cherries it is possible to use the known information that each sour black cherry can be modelled roughly as a high density sphere, with a central zone which is empty, therefore has much lower density. Using this information the electronic unit can first find the centres of the sour black cherries in a robust way and, then, find the diameter of the sour black cherry best suited to the upper part of it, an upper part which it may be assumed is not covered by syrup. The result is shown in Figure 7.

In a similar way, it is easy to distinguish between screws and nuts by identifying inside the secondary volume, primary volumes 9 having the shape of a screw or nut.

Moreover, once the arrangement of crispbreads inside a pack is known, and the thickness of the individual crispbreads, it is easy to distinguish them from each other even if they are in contact with each other (Figure 8).

The two embodiments just described may also be used by the electronic processing unit of a single apparatus, for different types of primary parts of a single product 2.

Moreover, in some embodiments, during the segmentation step the electronic unit may also identify residual primary volumes 9 by simply selecting all of the adjacent voxels which have a density different from that of the air and outside all of the expected predetermined ranges of densities.

Depending on the type of product 2 examined, it is also possible that during the segmentation step the electronic processing unit performs a preliminary division of the virtual three-dimensional tomography model 8 into multiple smaller models, for example identifying different portions of the product 2 which are separated by air (as in the case of the crispbreads in Figures 8 to 11).

During the assessment step, the electronic processing unit then assesses one or more predetermined properties, of one or more of the primary volumes 9 identified during the segmentation step. Regarding the predetermined properties of the primary volumes 9 identified in the virtual three-dimensional tomography model 8, the same considerations set out above also apply for the primary parts of the product 2 to which the primary volumes 9 correspond, since in the virtual three-dimensional tomography model 8 the primary volumes 9 correspond to the primary parts in the real product 2.

Then, the electronic processing unit is programmed to perform the comparison step, during which it compares the predetermined properties assessed during the assessment step, with corresponding reference values saved in an electronic memory associated with the electronic processing unit. The reference values are simply the quantification of reference predetermined properties which correspond to a product 2 which reflects the production specifications. The aim of the comparison step is to verify if there is a match between the predetermined properties assessed during the assessment step and the reference values saved.

As regards possible practical implementations of the assessment and comparison steps, those which correspond to the above indicated predetermined properties are listed below.

In some embodiments, the electronic processing unit assesses and compares the position of one or more primary volumes 9 inside the product 2. For example it may assess and compare the position of garnishing elements in food products 2, or the presence at the correct point of the individual parts of an assembled product 2.

In some embodiments, the electronic processing unit assesses and compares the total number of primary volumes 9 of a same type inside the product 2. For example it may assess and compare the total number of screws and nuts present in a bag.

Here below other possible practical implementations of the assessment and comparison steps.

In some embodiments, the electronic processing unit assesses and compares the dimensions of one or more primary volumes 9. For example it may assess and compare the thickness of a layer of a cake.

In some embodiments, the electronic processing unit assesses and compares the shape of one or more primary volumes 9. For example it may assess and compare the shape of an ice cream.

In some embodiments, the electronic processing unit assesses and compares the volume of one or more primary volumes 9. For example it may assess and compare the volume of syrup in an ice cream, or the volume of each individual piece of chocolate. Alternatively, it may also assess the corresponding masses of the one or more primary volumes (9).

In some embodiments, the electronic processing unit assesses and compares the total mass or volume of primary volumes 9 of a same type inside the product 2. For example it may assess and compare the total mass or volume of the pieces of chocolate in an ice cream.

In some embodiments, the electronic processing unit assesses and compares the total volume of the primary volumes 9 of a same type inside the product 2. For example it may assess and compare the total volume of tomatoes present in a tin of peeled tomatoes.

In some embodiments, the electronic processing unit, by assessing the shape of the primary volumes 9, or the presence of air zones inside them, and comparing those properties with saved reference values (respectively the correct shape and the maximum size of any air zones) assesses the integrity of one or more primary volumes 9 relative to a predetermined shape which those one or more primary volumes 9 should have.

In some embodiments, the electronic processing unit determines the presence, in predetermined zones of the product 2, of residual primary volumes 9 with density different from an expected density.

In some embodiments, the electronic processing unit assesses the presence of residual primary volumes 9 which are not expected for the product 2. Whilst in some embodiments the assessment and comparison steps are performed as two successive steps, in which the electronic processing unit proceeds with quantitative assessments, in other embodiments the assessment and comparison steps may be performed simultaneously and in such a way that they are not separate. In the latter case in particular the electronic processing unit comprises a neural network, or respectively a deep neural network, programmed to simultaneously perform the assessment and comparison steps, processing the virtual three-dimensional tomography model 8 generated during the segmentation step.

Since, as already indicated, the tomography apparatus 1 disclosed is specifically intended for examining products 2 of known type, for each predetermined property to be examined, the neural network, or respectively the deep neural network, is a network which must be trained in advance by supplying it with specific training input and output data. The input data will comprise a first and a second plurality of virtual three-dimensional tomography models processed by performing the same segmentation step which the electronic processing unit is programmed to perform. The virtual three-dimensional tomography models of the first plurality are models for which the predetermined properties to be examined correspond to the reference predetermined properties. In contrast, the virtual three-dimensional tomography models of the second plurality are models for which the predetermined properties do not correspond to the reference predetermined properties.

Since the products 2 are of known type and must always have the same features, on one hand it is easy to have available the models of the first group, and, on the other hand, it is relatively simple to specially create "faulty" products 2 in order to obtain the models of the second group.

It will be possible for the training output data to simply consist of a definition of product 2 with predetermined properties corresponding or not corresponding to the reference predetermined properties, or said data may even consist of identification of the zone of the product 2 for which there is no match.

Finally, during the classification step the electronic processing unit supplies an indication about the result of the comparison step, and in particular about whether or not the comparison step identified a match for the predetermined properties which have been assessed.

Depending on the embodiments, the indication may be supplied in many different ways. In particular it may be supplied to an operator by means of a screen, or it may be transmitted to other apparatuses of the plant in which the apparatus is mounted. Moreover, it may be saved in combination with the data about that product 2.

Figures 1 to 5 show in the form of rendering, different aspects of a virtual three-dimensional tomography model 8 of a tub of ice cream, which comprises various primary parts: the tub, the lid, the ice cream, pieces of chocolate distributed in the ice cream, sour black cherries as a garnish on top of the ice cream and a syrup as a garnish also positioned on top of the ice cream.

Figure 1 shows the model of the tub as a whole.

Figure 2 shows the result of a segmentation in which the primary volumes 9 which correspond to the sour black cherries 10 have been identified.

Figure 3 shows the result of a second segmentation in which, in addition to the sour black cherries, the syrup 11 has also been identified.

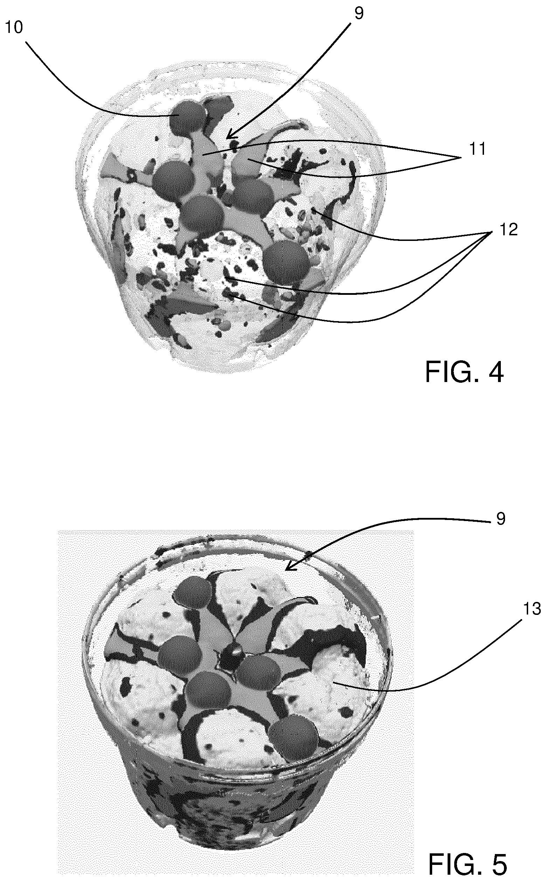

Figure 4 shows the result of a further segmentation in which the pieces of chocolate 12 have also been identified.

It should be noticed that in Figures 2, 3 and 4 both the tub, and the ice cream are shown as slightly transparent with the sole aim of making the effect of the segmentation clearer.

Finally, Figure 5 shows the result of a further step in which the primary part constituted of the ice cream 13 has also been identified (notice that in the upper part of the ice cream not all of the pieces of chocolate shown in Figure 4 are now visible, only the surface pieces).

Figure 8 shows a top view of the virtual three-dimensional tomography model 8 of a pack of crispbreads. For execution of the examination procedure, in the case of a product 2 of this type (in which the orientation of the internal primary parts is known) it is advantageous to orient the virtual three-dimensional tomography model 8 in such a way as to align the individual crispbreads (or, in general, the individual main parts) with the main axes. Therefore, it is possible to identify the virtual three-dimensional tomography models of the various crispbreads; the separation between the various crispbreads is easy to determine by calculating the average density of the crispbreads of the image and distinguishing between what has an above average density (crispbreads) and what has a below average density (air). Alternatively, the density values to be searched for may in any case even be predicted beforehand.

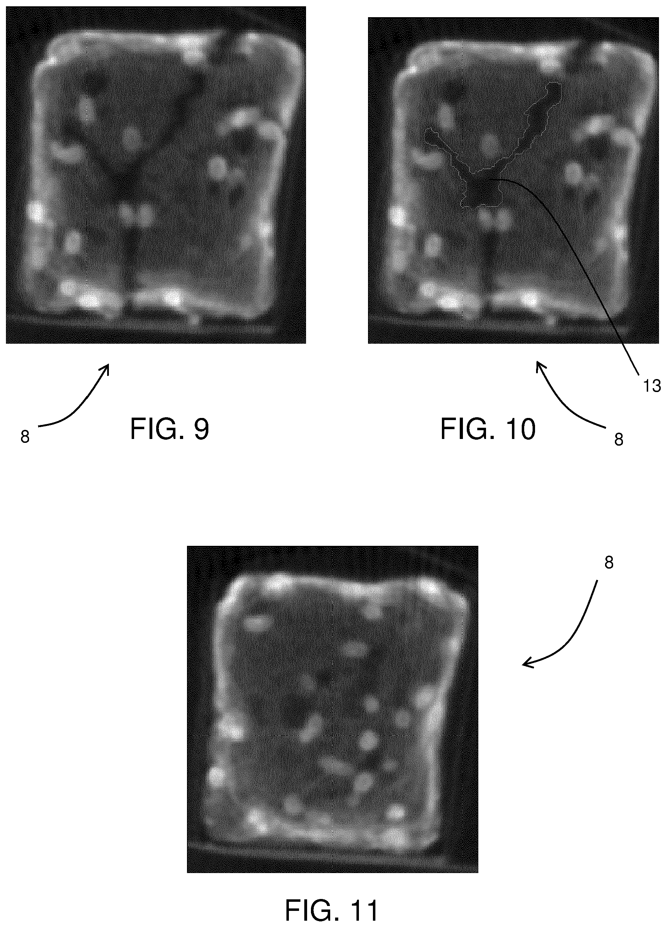

Figures 9 and 10 show the difference between the model of a broken crispbread and that of an intact crispbread (Figure 11).

In the case of a broken crispbread, the zones where the breakage is located have a lower than average density. Moreover, their extent is greater than that of air bubbles which may be found in the crispbread, and/or they extend between two edges. Consequently, it is possible to identify the breakage zones either by identifying the low density zones, which have an extent greater than a predetermined threshold (area 14 in Figure 10), or by identifying the low density zones, which extend without interruption between two edges of the crispbread.

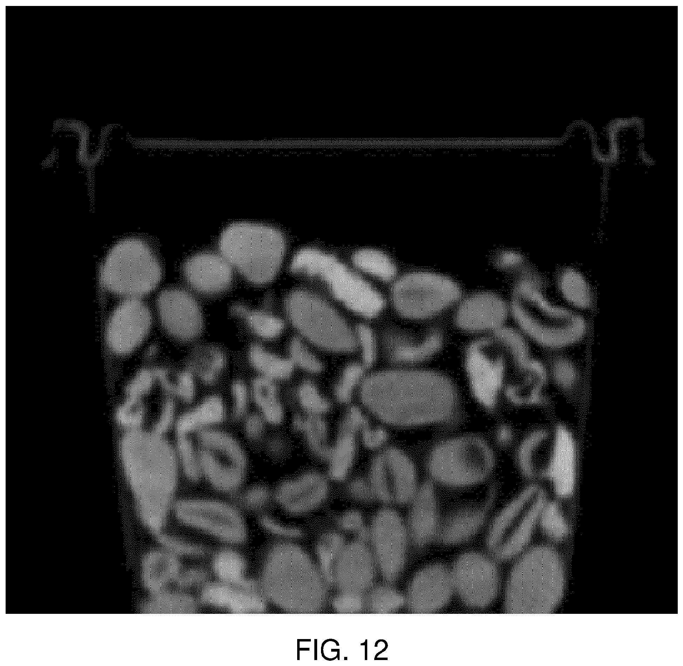

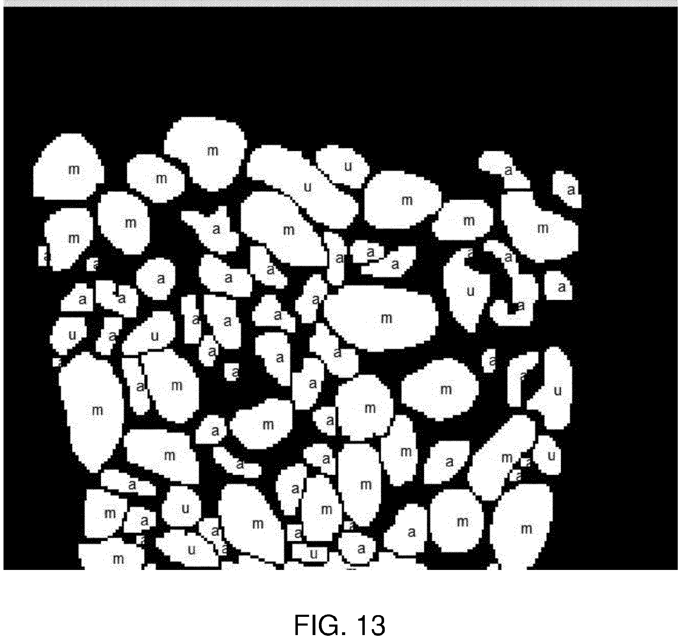

Figures 12 and 13 relate to a product 2 constituted of a packet of mixed dried fruit and nuts, which contains peanuts, almonds and raisins. Figure 12 shows a vertical section of the relative virtual three-dimensional tomography model 8, whilst Figure 13 shows the result of a triple segmentation of the model, performed to identify the three types of dried fruit and nuts.

In Figure 13 the letter "u" indicates raisins: this is the type of fruit with the greatest density and may be distinguished from the others simply on the basis of that parameter. The letter "a" indicates the peanuts, whilst the letter "m" indicates the almonds. Since the density of peanuts and almonds is very similar and it is not possible to differentiate between the two types of nuts only based on this parameter, it was necessary to also refer to the information known beforehand about the shape and the dimensions of the two types of nuts; in fact the peanuts are smaller than the almonds.

In other embodiments of this invention, in contrast the electronic processing unit comprises a neural network or a deep neural network which perform the entire examination procedure (therefore, not just the assessment and comparison steps as in the case previously described).

The neural network, or respectively the deep neural network, is programmed to process the entire virtual three-dimensional tomography model 8 in order to establish whether or not the one or more predetermined properties to be examined correspond to the reference predetermined properties. For that purpose, for each predetermined property to be examined, the neural network, or respectively the deep neural network, was trained in advance by supplying them with specific training input and output data. The input data will comprise a first and a second plurality of virtual three-dimensional tomography models. The virtual three-dimensional tomography models of the first plurality are models for which the predetermined properties to be examined correspond to the reference predetermined properties. In contrast, the virtual three-dimensional tomography models of the second plurality are models for which the predetermined properties do not correspond to the reference predetermined properties.

In this case too, as in that previously described, obtaining the models of the first and second pluralities necessary as input data is simple.

As in the preceding case, it will be possible for the training output data to simply consist of a definition of product 2 with predetermined properties corresponding or not corresponding to the reference predetermined properties, or said data may even consist of identification of the zone of the product 2 for which there is no match.

The context of this invention covers both the tomography apparatus 1 itself, and a plant 14 for the industrial production of products 2, which includes it.

In general the plant 14 comprises a production line 15, along which one or more product 2 preparation stations 16 are mounted one after another. In the context of this invention preparation station 16 means any station which performs any processing on the product 2, whether it is a station for adding primary parts, for assembly, processing, packaging, etc.

An industrial tomography apparatus 1 according to what is described above is mounted along the production line 15 downstream of at least one preparation station 16 for the product 2, advantageously downstream of one or more preparation stations 16 in which operations are performed which may have an effect on the predetermined properties to be examined.

In some embodiments, at the end of the examination procedure the electronic processing unit classifies the product 2 as conforming or non-conforming based on the predetermined properties assessed.

In some embodiments the electronic processing unit, at the end of the examination procedure, classifies a product 2 as non-conforming when the comparison step has identified one or more failures to match.

In some embodiments the electronic processing unit, at the end of the examination procedure, classifies a product 2 as non-conforming when the comparison step has identified, not just a failure to match, but also a difference, between the predetermined properties assessed and the corresponding reference values, which is above a maximum tolerance value. For example, a product 2 (such as an ice cream) may in any case be considered conforming when the non-conformity relates only to part of the predetermined properties examined (for example, no more than two of ten) and the difference between the predetermined properties assessed and the corresponding reference values does not exceed 10% of the reference value. Moreover, in some embodiments, downstream of the industrial tomography apparatus 1, the plant 14 comprises an ejection station 17 configured to expel non-conforming products 2 from the production line 15 and to send them along a rejection or recovery path 18. Therefore, the electronic processing unit is connected (directly or indirectly) to the ejection station 17 for communicating to the ejection station 17 which products 2 have been classified as non-conforming. The plant 14 will also be equipped with a tracking system for the position of each individual product 2 along the production line 15 in such a way as to be able to precisely establish when each product 2 examined by the industrial tomography apparatus 1, arrives in the ejection station 17. The industrial tomography apparatus 1 and the ejection station 17 may be positioned either at the end of the production line 15 (Figure 15) or at a position in the middle of it (Figure 16).

In some embodiments, alternatively or in addition to classification of the product 2 as conforming or non-conforming, the plant 14 comprises a checking system connected to the electronic processing unit for receiving from it information about the predetermined properties assessed. When the electronic processing unit supplies, for a plurality of distinct products 2, a same indication of failure to match one or more predetermined properties assessed, the checking system is also configured to modify the operating parameters of the one or more preparation stations 16 for the product 2 (for example to reduce the quantity of syrup supplied on an ice cream if for a series of successive verifications the quantity proved to be excessive).

In some embodiments, the checking system is connected to the electronic processing unit in order to receive from it the indication of whether or not the comparison step has identified a match for the predetermined properties assessed.

Moving on to the method for checking the composition of industrial products 2 which comprise a plurality of primary parts in accordance with this invention, many aspects of it may be inferred from the above description of the apparatus.

It comprises first a tomography scan step, in which, using a tomography apparatus 1 inserted in a production line 15, a computed tomography scan of the product 2 is performed and a virtual three-dimensional tomography model 8 of it is obtained, constituted of a plurality of voxels, each of which is assumed to have its own constant density.

Then a step of computerised analysis of the virtual three-dimensional tomography model 8 is performed, for assessment of predetermined properties of the primary parts of the product 2 to which the virtual three-dimensional tomography model 8 corresponds.

Obviously, the predetermined properties assessed may be the same as previously indicated.

In some embodiments, the computerised analysis step comprises a segmentation step, an assessment step, a comparison step and a classification step whose operations correspond to those described above with reference to programming of the electronic processing unit.

In other embodiments, the computerised analysis step is wholly or partly implemented by means of neural networks, or deep neural networks, similarly to what was described above with reference to the apparatus.

This invention brings important advantages.

In fact, thanks to this invention it has been possible to provide an apparatus and a method which allow systematic checking of the composition of the whole production of industrial products 2 of known type.

Second, thanks to this invention it is possible to verify with good precision, for each product 2, the correct positioning relative to each other of the various primary parts and/or the correct quantity of each type of primary parts and/or the integrity of the various primary parts and/or the presence of the correct primary parts and/or the absence of elements which are not expected.

The invention described above may be modified and adapted in several ways without thereby departing from the scope of the claims.

All details may be substituted with other technically equivalent elements and the materials used, as well as the shapes and dimensions of the various components, may vary according to requirements.

## Claims

1. An industrial tomography apparatus (1) comprising:
a conveying device (3), configured to feed to a scanning zone (4), and respectively remove from the scanning zone (4), products (2) to be examined which are of known type, comprise a plurality of primary parts and have known features which reflect production and/or packaging specifications;
a tomography scan device (7) configured to perform tomography scans of a product (2) placed in the scanning zone (4); and
an electronic processing unit operatively connected to the tomography scan device (7) for receiving from it digital data about the tomography scans performed by the tomography scan device (7), and programmed to generate, using that digital data, a virtual three-dimensional tomography model (8) of the product (2) scanned by the tomography scan device (7), the virtual three-dimensional tomography model (8) being constituted of a plurality of voxels each of which has its own constant density;
**characterised in that**:
the electronic processing unit is also programmed to perform by its own a whole computerised examination procedure on the virtual three-dimensional tomography model (8), for examining the composition of the product (2) scanned by the tomography scan device (7); and
**in that** during the computerised examination procedure of the composition of the product (2), the electronic processing unit is programmed to examine the virtual three-dimensional tomography model (8) and to assess at least one of the following predetermined properties of the product (2): the position of one or more primary parts inside the product (2) and the total number of primary parts of a same type inside the product (2).

2. The industrial tomography apparatus (1) according to claim 1, wherein the electronic processing unit is further programmed to classify by its own the product (2), at the end of the examination procedure, as conforming or non-conforming based on the predetermined properties assessed during the computerised examination procedure.

3. The industrial tomography apparatus (1) according to claim 1 or 2, wherein the examination procedure which the electronic processing unit is programmed to perform for each product (2) of known type, comprises the following operating steps:
a segmentation step, wherein in the three-dimensional tomography model (8), the electronic processing unit identifies a plurality of primary volumes (9), each of which is constituted of adjacent voxels which have densities inside a same predetermined range of densities, and each of which corresponds to one of the primary parts which constitute the real product (2);
an assessment step, wherein the electronic processing unit assesses one or more predetermined properties of one or more of the primary volumes (9) identified in that way;
a comparison step, wherein the electronic processing unit compares the predetermined properties assessed during the assessment step with corresponding reference values saved in an electronic memory, to verify if there is a match; and
a classification step, wherein the electronic processing unit supplies an indication of whether or not the comparison step has identified a match for the predetermined properties assessed.

4. The industrial tomography apparatus (1) according to claim 3 wherein, during the segmentation step, each predetermined range of densities corresponds to a known range of densities of one of the primary parts which constitute the product (2).

5. The industrial tomography apparatus (1) according to claim 3 or 4 wherein, during the segmentation step, the electronic processing unit identifies each primary volume (9) by selecting for that primary volume (9), all of the adjacent voxels which have densities inside a predetermined range of densities.

6. The industrial tomography apparatus (1) according to claim 3 or 4 wherein, during the segmentation step, for one or more predetermined ranges of densities, the electronic processing unit first selects all adjacent voxels which have densities inside that predetermined range of densities thereby identifying a secondary volume, and then divides that secondary volume into a plurality of primary volumes (9), using saved information about known aspects of the primary parts to which the primary volumes (9) must correspond.

7. The industrial tomography apparatus (1) according to any one of claims 3 to 6, wherein the predetermined properties which are the subject of the assessment and comparison steps are constituted by at least one of the following: the position of one or more primary volumes (9) inside the product (2) and the total number of primary volumes (9) of a same type inside the product (2).

8. The industrial tomography apparatus (1) according to any one of claims 3 to 7, wherein the electronic processing unit comprises a neural network or a deep neural network, programmed to simultaneously perform the assessment and comparison steps by processing the virtual three-dimensional tomography model (8) generated during the segmentation step, and wherein, for each predetermined property to be examined, the neural network, or respectively the deep neural network, has been trained with a first plurality of virtual three-dimensional tomography models of products (2) of the same type, processed with the segmentation step, for which the predetermined properties correspond to the reference predetermined properties, and with a second plurality of virtual three-dimensional tomography models of products (2) of the same type, processed with the segmentation step, for which the predetermined properties do not correspond to the reference predetermined properties.

9. The industrial tomography apparatus (1) according to claim 1 or 2, wherein the electronic processing unit comprises a neural network or a deep neural network, which perform the entire examination procedure and which are programmed to process the virtual three-dimensional tomography model (8) in order to establish whether or not the one or more predetermined properties examined correspond to reference predetermined properties, and wherein, for each predetermined property to be examined, the neural network, or respectively the deep neural network, has been trained with a first plurality of virtual three-dimensional tomography models of products (2) of the same type for which the predetermined properties correspond to the reference predetermined properties, and with a second plurality of virtual three-dimensional tomography models of products (2) of the same type for which the predetermined properties do not correspond to the reference predetermined properties.

10. A plant (14) for the industrial production of products (2) comprising a plurality of primary parts and having known features which reflect production and/or packaging specifications, comprising:
a production line (15) along which one or more product (2) preparation stations (16) are mounted one after another;
at least one industrial tomography apparatus (1) according to any one of claims 1 to 9, which is mounted along the production line (15) downstream of at least one preparation station (16) for the product (2), and which is configured for systematic in line checking the composition of all products (2) produced by the plant (14) and for classifying, at the end of the computerised examination procedure, each product (2) as conforming or non-conforming based on the predetermined properties assessed during the computerised examination procedure; and
an ejection station (17) mounted along the production line (15) downstream of the industrial tomography apparatus (1);
wherein the electronic processing unit of the at least one industrial tomography apparatus (1) is connected to the ejection station (17) for communicating to the ejection station (17) which products (2) have been classified as non-conforming, and the ejection station (17) is configured to expel from the production line (15) products (2) arriving at the ejection station which have been classified as non-conforming by the industrial tomography apparatus (1).

11. The plant (14) according to claim 10 when it is dependent on claim 3, wherein, at the end of the examination procedure, the electronic processing unit classifies a product (2) as non-conforming when the comparison step has identified one or more failures to match and/or when the comparison step has identified, in the case of a failure to match, a difference between the predetermined properties assessed and the corresponding reference values which is above a maximum tolerance value.

12. The plant (14) according to claim 11, wherein the plant (14) comprises a checking system connected to the electronic processing unit, and wherein the checking system is configured to modify operating parameters of the one or more preparation stations (16), when the electronic processing unit supplies, for a plurality of distinct products (2), a same indication of failure to match one or more predetermined properties assessed.

13. The plant (14) according to claim 12, wherein the checking system is connected to the electronic processing unit in order to receive from it the indication of whether or not the comparison step has identified a match for the predetermined properties assessed.

14. A method for checking the composition of industrial products (2) which comprise a plurality of primary parts and have known features, wherein the known features reflect the production and/or packaging specifications, the method comprising the following operating steps:
a tomography scan step, wherein, by means of a tomography apparatus (1) inserted in a production line (15), a computed tomography scan of the product (2) is performed and a virtual three-dimensional tomography model (8) of it is obtained, constituted of a plurality of voxels, each of which has its own constant density; and
a step of computerised analysis of the virtual three-dimensional tomography model (8) wholly executed by an electronic processing unit programmed for executing such a step of computerised analysis, during which the electronic processing unit assesses by its own predetermined properties of the primary parts of the product (2) to which the virtual three-dimensional tomography model (8) corresponds, chosen between the position of one or more primary parts inside the product (2) and the total number of primary parts of a same type inside the product (2).

15. The method according to claim 14 wherein the industrial products (2) are food products.

16. The method according to claim 14 or 15 wherein, the step of computerised analysis comprises:
a segmentation step, wherein in the three-dimensional tomography model (8), a plurality of primary volumes (9) is identified, each of which is constituted of adjacent voxels which have densities inside a same predetermined range of densities, and each of which corresponds to one of the primary parts which constitute the real product (2);
an assessment step, wherein one or more predetermined properties are assessed, of one or more of the primary volumes (9) identified during the segmentation step.
a comparison step, wherein the predetermined properties assessed during the assessment step are compared with corresponding reference values saved in an electronic memory, to verify if there is a match; and
a classification step, wherein an indication is supplied of whether or not the comparison step has identified a match for the predetermined properties assessed.

17. The method according to claim 16 wherein, during the segmentation step, each predetermined range of densities corresponds to a known range of densities of one of the primary parts which constitute the product (2).

18. The method according to claim 16 or 17 wherein, during the segmentation step, each primary volume (9) is identified by selecting for that primary volume (9), all of the adjacent voxels which have densities inside a predetermined range of densities.

19. The method according to claim 16 or 17 wherein, during the segmentation step, for one or more predetermined ranges of densities, first all adjacent voxels which have densities inside that predetermined range of densities are selected thereby identifying a secondary volume, and then that secondary volume is divided into a plurality of primary volumes (9), using saved information about known aspects of the primary parts to which the primary volumes (9) must correspond.

20. The method according to any one of claims 16 to 19, wherein the predetermined properties which are the subject of the assessment and comparison steps are constituted by at least one of the position of one or more primary volumes (9) inside the product (2) and the total number of primary volumes (9) of a same type inside the product (2).

21. The method according to any one of claims 16 to 20, wherein the assessment and comparison steps are performed by processing the virtual three-dimensional tomography model (8) generated during the segmentation step with a neural network or a deep neural network, and wherein, for each predetermined property to be examined, the neural network, or respectively the deep neural network, has been trained with a first plurality of virtual three-dimensional tomography models of products (2) of the same type, processed with the segmentation step, for which the predetermined properties correspond to the reference predetermined properties, and with a second plurality of virtual three-dimensional tomography models of products (2) of the same type, processed with the segmentation step, for which the predetermined properties do not correspond to the reference predetermined properties.

22. The method according to any one of claims 14 to 15, wherein the entire step of computerised analysis is performed by processing the virtual three-dimensional tomography model (8) by means of a neural network or a deep neural network, in order to establish whether or not the one or more predetermined properties examined correspond to reference predetermined properties, and wherein, for each predetermined property to be examined, the neural network, or respectively the deep neural network, has been trained with a first plurality of virtual three-dimensional tomography models of products (2) of the same type for which the predetermined properties correspond to the reference predetermined properties, and with a second plurality of virtual three-dimensional tomography models of products (2) of the same type for which the predetermined properties do not correspond to the reference predetermined properties.

## Patentansprüche

1. Eine industrielle Tomographievorrichtung (1), Folgendes beinhaltend:
eine Fördervorrichtung (3), dazu ausgelegt, um zu prüfende Produkte (2), die von einer bekannten Art sind, eine Vielzahl von Hauptteilen beinhalten und bekannte Merkmale aufweisen, die Produktions- und/oder Verpackungsspezifikationen widerspiegeln, einem Scanbereich (4) zuzuführen und entsprechend aus dem Scanbereich (4) zu entfernen;
ein Tomographie-Scangerät (7), dazu ausgelegt, um Tomographieaufnahmen eines Produkts (2), das im Scanbereich (4) platziert wurde, durchzuführen; und
eine elektronische Verarbeitungseinheit, die operativ mit dem Tomographie-Scangerät (7) verbunden ist, um von diesem digitale Daten über die vom Tomographie-Scangerat (7) durchgeführten Tomographieaufnahmen zu empfangen, und die dazu programmiert ist, unter Verwendung dieser digitalen Daten ein virtuelles, dreidimensionales Tomographiemodell (8) des vom Tomographie-Scangerät (7) gescannten Produkts (2) zu erzeugen, das virtuelle, dreidimensionale Tomographiemodell (8) besteht dabei aus einer Vielzahl von Voxeln, von denen jedes seine eigene, konstante Dichte hat; **gekennzeichnet dadurch, dass**:
die elektronische Verarbeitungseinheit auch dazu programmiert ist, selbstständig ein gesamtes, computerisiertes Prüfverfahren am virtuellen, dreidimensionalen Tomographiemodell (8) durchzuführen, um die Zusammensetzung des vom Tomographie-Scangerät (7) gescannten Produkts (2) zu überprüfen; und
dadurch, dass die elektronische Verarbeitungseinheit dazu programmiert ist, während des computerisierten Prüfverfahrens der Zusammensetzung des Produkts (2) das virtuelle, dreidimensionale Tomographiemodell (8) zu untersuchen und mindestens eine der folgenden, vorgegebenen Eigenschaften des Produkts (2) zu bewerten: die Position des einen oder der mehreren Hauptteile innerhalb des Produkts (2) und die Gesamtanzahl von Hauptteilen einer selben Art innerhalb des Produkts (2).

2. Die industrielle Tomographievorrichtung (1) nach dem Patentanspruch 1, wobei die elektronische Verarbeitungseinheit weiter dazu programmiert ist, das Produkt (2) am Ende des Prüfverfahrens auf der Grundlage der vorgegebenen Eigenschaften, die während des computerisierten Prüfverfahrens bewertet wurden, selbstständig als konform oder nicht konform zu klassifizieren.

3. Die industrielle Tomographievorrichtung (1) nach dem Patentanspruch 1 oder 2, wobei das Prüfverfahren, zu dessen Durchführung für jedes Produkt (2) bekannter Art die elektronische Verarbeitungseinheit programmiert ist, folgende Betriebsschritte beinhaltet:
einen Segmentierungsschritt, bei dem die elektronische Verarbeitungseinheit im dreidimensionale Tomographiemodell (8) eine Vielzahl von Primärvolumen (9) identifiziert, von denen jedes aus nebeneinander liegenden Voxeln besteht, die Dichten innerhalb eines selben, vorgegebenen Dichtebereichs haben, und von denen jedes einem der Hauptteile entspricht, aus denen das echte Produkt (2) besteht;
einen Bewertungsschritt, bei dem die elektronische Verarbeitungseinheit eine oder mehrere vorgegebene Eigenschaften eines oder mehrerer auf diese Art identifizierter Primärvolumen (9) bewertet;
einen Vergleichsschritt, bei dem die elektronische Verarbeitungseinheit die während des Bewertungsschritts bewerteten vorgegebenen Eigenschaften mit entsprechenden Referenzwerten, die in einem elektronischen Speicher gespeichert sind, vergleicht, um zu überprüfen, ob eine Übereinstimmung vorliegt; und
einen Klassifizierungsschritt, bei dem die elektronische Verarbeitungseinheit eine Angabe darüber, ob der Vergleichsschritt eine Übereinstimmung für die bewerteten, vorgegebenen Eigenschaften identifiziert hat oder nicht, liefert.

4. Die industrielle Tomographievorrichtung (1) nach dem Patentanspruch 3, wobei während des Segmentierungsschritts jeder vorgegebene Dichtebereich einem bekannten Dichtebereich eines der Hauptteile, aus denen das Produkt (2) besteht, entspricht.

5. Die industrielle Tomographievorrichtung (1) nach dem Patentanspruch 3 oder 4, wobei während des Segmentierungsschritts die elektronische Verarbeitungseinheit jedes Primärvolumen (9) identifiziert, indem sie für dieses Primärvolumen (9) alle nebeneinander liegenden Voxel auswählt, die Dichten haben, die innerhalb eines vorgegebenen Dichtebereichs liegen.

6. Die industrielle Tomographievorrichtung (1) nach dem Patentanspruch 3 oder 4, wobei während des Segmentierungsschritts die elektronische Verarbeitungseinheit für einen oder mehrere vorgegebene Dichtebereiche zuerst alle nebeneinander liegenden Voxel auswählt, die Dichten innerhalb dieses vorgegebenen Dichtebereichs haben, und dadurch ein Sekundärvolumen identifiziert, und dann dieses Sekundärvolumen in eine Vielzahl von Primärvolumen (9) aufteilt, wozu sie gespeicherte Informationen über bekannte Aspekte der Hauptteile verwendet, denen die Primärvolumen (9) entsprechen müssen.

7. Die industrielle Tomographievorrichtung (1) nach jedem der Patentansprüche 3 bis 6, wobei die vorgegebenen Eigenschaften, die Gegenstand des Bewertungs- und des Vergleichsschritts sind, mindestens eine aus den folgenden sind: die Position eines oder mehrerer Primärvolumen (9) innerhalb des Produkts (2) und die Gesamtanzahl von Primärvolumen (9) einer selben Art innerhalb des Produkts (2).

8. Die industrielle Tomographievorrichtung (1) nach jedem der Patentansprüche 3 bis 7, wobei die elektronische Verarbeitungseinheit ein neuronales Netz oder ein tiefes neuronales Netz beinhaltet, dazu programmiert, gleichzeitig den Bewertungs- und den Vergleichsschritt durchzuführen, indem es das virtuelle, dreidimensionale Tomographiemodell (8), das während des Segmentierungsschritts erzeugt wurde, verarbeitet, und wobei das neuronale Netz beziehungsweise das tiefe neuronale Netz für jede vorgegebene, zu untersuchende Eigenschaft mit einer ersten Vielzahl virtueller, dreidimensionaler Tomographiemodelle von Produkten (2) derselben Art, die mit dem Segmentierungsschritt verarbeitet wurden, bei denen die vorgegebenen Eigenschaften den vorgegebenen Referenzeigenschaften entsprechen, und mit einer zweiten Vielzahl virtueller, dreidimensionaler Tomographiemodelle von Produkten (2) derselben Art, die mit dem Segmentierungsschritt verarbeitet wurden, bei denen die vorgegebenen Eigenschaften nicht den vorgegebenen Referenzeigenschaften entsprechen, trainiert wurde.

9. Die industrielle Tomographievorrichtung (1) nach dem Patentanspruch 1 oder 2, wobei die elektronische Verarbeitungseinheit ein neuronales Netz oder ein tiefes neuronales Netz beinhaltet, die das gesamte Prüfverfahren durchführen und die programmiert sind, um das virtuelle, dreidimensionale Tomographiemodell (8) zu verarbeiten, um zu bestimmen, ob die untersuchten eine oder mehreren vorgegebenen Eigenschaften vorgegebenen Referenzeigenschaften entsprechen oder nicht, und wobei, für jede zu untersuchende vorgegebene Eigenschaft, das neuronale Netz beziehungsweise das tiefe neuronale Netz mit einer ersten Vielzahl virtueller, dreidimensionaler Tomographiemodelle von Produkten (2) derselben Art, bei denen die vorgegebenen Eigenschaften den vorgegebenen Referenzeigenschaften entsprechen, und mit einer zweiten Vielzahl virtueller, dreidimensionaler Tomographiemodelle von Produkten (2) derselben Art, bei denen die vorgegebenen Eigenschaften nicht den vorgegebenen Referenzeigenschaften entsprechen, trainiert wurde.

10. Eine Anlage (14) zur industriellen Herstellung von Produkten (2), die dabei eine Vielzahl von Hauptteilen beinhalten und dabei bekannte Merkmale aufweisen, die Produktions- und /oder Verpackungsspezifikationen widerspiegeln, Folgendes beinhaltend:
eine Fertigungslinie (15), entlang der eine oder mehrere Vorbereitungsstationen (16) von Produkten (2) eine nach der anderen montiert sind;
mindestens eine industrielle Tomographievorrichtung (1) nach jedem der Patentansprüche 1 bis 9, die entlang der Fertigungslinie (15) nach der mindestens einen Vorbereitungsstation (16) für das Produkt (2) montiert ist und die für die systematischen Kontrolle in der Linie der Zusammensetzung aller Produkte (2), die in der Anlage (14) hergestellt werden, und für die Klassifizierung jedes Produkts (2) am Ende des computerisierten Prüfverfahrens als konform oder nicht konform, auf der Grundlage der vorgegebenen, während des computerisierten Prüfverfahrens bewerteten Eigenschaften, ausgelegt ist; und
eine Auswurfstation (17), die entlang der Fertigungslinie (15) nach der industriellen Tomographievorrichtung (1) montiert ist; wobei die elektronische Verarbeitungseinheit der mindestens einen industriellen Tomographievorrichtung (1) mit der Auswurfstation (17) verbunden ist, um der Auswurfstation (17) mitzuteilen, welche Produkte (2) als nicht konform klassifiziert wurden, und die Auswurfstation (17) dazu ausgelegt ist, Produkte (2), die an der Auswurfstation ankommen, die von der industriellen Tomographievorrichtung (1) als nicht konform klassifiziert wurden, aus der Fertigungslinie (15) auszuwerfen.

11. Die Anlage (14) nach dem Patentanspruch 10, wenn er vom Patentanspruch 3 abhängt, wobei am Ende des Prüfverfahrens die elektronische Verarbeitungseinheit ein Produkt (2) als nicht konform klassifiziert, wenn der Vergleichsschritt eine oder mehrere fehlgeschlagene Übereinstimmungen identifiziert hat und/oder wenn der Vergleichsschritt im Falle einer fehlgeschlagenen Übereinstimmung einen Unterschied zwischen den bewerteten vorgegebenen Eigenschaften und den entsprechenden Referenzwerten, der einen maximalen Toleranzwert überschreitet, identifiziert hat.

12. Die Anlage (14) nach dem Patentanspruch 11, wobei die Anlage (14) ein Kontrollsystem beinhaltet, das mit der elektronischen Verarbeitungseinheit verbunden ist, und wobei das Kontrollsystem dazu ausgelegt ist, Betriebsparameter der einen oder mehreren Vorbereitungsstationen (16) zu verändern, wenn die elektronische Verarbeitungseinheit für eine Vielzahl verschiedener Produkte (2) eine selbe Angabe einer fehlgeschlagenen Übereinstimmung mit einer oder mehreren vorgegebenen, bewerteten Eigenschaften liefert.

13. Die Anlage (14) nach dem Patentanspruch 12, wobei das Kontrollsystem mit der elektronischen Verarbeitungseinheit verbunden ist, um von ihr die Angabe zu empfangen, ob der Vergleichsschritt für die vorgegebenen, bewerteten Eigenschaften eine Übereinstimmung identifiziert hat oder nicht.

14. Ein Verfahren zur Kontrolle der Zusammensetzung industrieller Produkte (2), die eine Vielzahl von Hauptteilen beinhalten und bekannte Merkmale aufweisen, wobei die bekannten Merkmale die Produktions- und/oder Verpackungsspezifikationen widerspiegeln, das Verfahren beinhaltet dabei folgende Betriebsschritte:
einen Schritt einer Tomographieaufnahme, wobei, mittels einer Tomographievorrichtung (1), die in eine Fertigungslinie (15) eingesetzt ist, eine computergestützte Tomographieaufnahme des Produkts (2) durchgeführt wird und ein virtuelles, dreidimensionales Tomographiemodell (8) davon erhalten wird, das aus einer Vielzahl von Voxeln besteht, von denen jedes seine eigene, konstante Dichte hat; und
einen Schritt der computerisierten Analyse des virtuellen, dreidimensionalen Tomographiemodells (8), vollständig von einer elektronischen Verarbeitungseinheit ausgeführt, die zur Ausführung eines solchen Schritts einer computerisierten Analyse programmiert ist, während dessen die elektronische Verarbeitungseinheit selbstständig vorgegebene Eigenschaften der Hauptteile des Produkts (2), dem das virtuelle, dreidimensionale Tomographiemodell (8) entspricht, bewertet, ausgewählt zwischen der Position eines oder mehrerer Hauptteile innerhalb des Produkts (2) und der Gesamtanzahl von Hauptteilen einer selben Art innerhalb des Produkts (2).

15. Das Verfahren nach dem Patentanspruch 14, wobei die industriellen Produkte (2) Lebensmittelprodukte sind.

16. Das Verfahren nach dem Patentanspruch 14 oder 15, wobei der Schritt der computerisierten Analyse Folgendes beinhaltet:
einen Segmentierungsschritt, bei dem im dreidimensionale Tomographiemodell (8) eine Vielzahl von Primärvolumen (9) identifiziert wird, von denen jedes aus nebeneinander liegenden Voxeln besteht, die Dichten innerhalb eines selben, vorgegebenen Dichtebereichs haben, und von denen jedes einem der Hauptteile entspricht, aus denen das echte Produkt (2) besteht;
einen Bewertungsschritt, bei dem eine oder mehrere vorgegebene Eigenschaften eines oder mehrerer während des Segmentierungsschritts identifizierter Primärvolumen (9) bewertet werden;
einen Vergleichsschritt, bei dem die vorgegebenen, während des Bewertungsschritts bewerteten Eigenschaften mit entsprechenden Referenzwerten, die in einem elektronischen Speicher gespeichert sind, verglichen werden, um zu überprüfen, ob eine Übereinstimmung vorliegt; und
einen Klassifizierungsschritt, bei dem eine Angabe darüber, ob der Vergleichsschritt für die bewerteten, vorgegebenen Eigenschaften eine Übereinstimmung identifiziert hat oder nicht, geliefert wird.

17. Das Verfahren nach dem Patentanspruch 16, wobei während des Segmentierungsschritts jeder vorgegebene Dichtebereich einem bekannten Dichtebereich eines der Hauptteile, aus denen das Produkt (2) besteht, entspricht.

18. Das Verfahren nach dem Patentanspruch 16 oder 17, wobei während des Segmentierungsschritts jedes Primärvolumen (9) identifiziert wird, indem für dieses Primärvolumen (9) alle nebeneinander liegenden Voxel ausgewählt werden, die Dichten haben, die innerhalb eines vorgegebenen Dichtebereichs liegen.

19. Das Verfahren nach dem Patentanspruch 16 oder 17, wobei während des Segmentierungsschritts für einen oder mehrere vorgegebene Dichtebereiche zuerst alle nebeneinander liegenden Voxel ausgewählt werden, die Dichten innerhalb dieses vorgegebenen Dichtebereichs haben, und dadurch ein Sekundärvolumen identifiziert wird, und dann dieses Sekundärvolumen in eine Vielzahl von Primärvolumen (9) aufgeteilt wird, wobei gespeicherte Informationen über bekannte Aspekte der Hauptteile verwendet werden, denen die Primärvolumen (9) entsprechen müssen.

20. Das Verfahren nach jedem der Patentanspruch 16 bis 19, wobei die vorgegebenen Eigenschaften, die Gegenstand des Bewertungs- und des Vergleichsschritts sind, aus mindestens einer der folgenden bestehen: der Position eines oder mehrerer Primärvolumen (9) innerhalb des Produkts (2) und der Gesamtanzahl von Primärvolumen (9) einer selben Art innerhalb des Produkts (2).

21. Das Verfahren nach jedem der Patentanspruch 16 bis 20, wobei der Bewertungs- und der Vergleichsschritt durchgeführt werden, indem das virtuelle, dreidimensionale Tomographiemodell (8), das während des Segmentierungsschritts erzeugt wurde, mit einem neuronalen Netz oder einem tiefen neuronalen Netz verarbeitet wird, und wobei für jede vorgegebene, zu untersuchende Eigenschaft das neuronale Netz beziehungsweise das tiefe neuronale Netz mit einer ersten Vielzahl virtueller, dreidimensionaler Tomographiemodelle von Produkten (2) derselben Art, die mit dem Segmentierungsschritt verarbeitet wurden, bei denen die vorgegebenen Eigenschaften den vorgegebenen Referenzeigenschaften entsprechen, und mit einer zweiten Vielzahl virtueller, dreidimensionaler Tomographiemodelle von Produkten (2) derselben Art, die mit dem Segmentierungsschritt verarbeitet wurden, bei denen die vorgegebenen Eigenschaften nicht den vorgegebenen Referenzeigenschaften entsprechen, trainiert wurde.

22. Das Verfahren nach jedem der Patentansprüche 14 bis 15, wobei der gesamte Schritt der computerisierten Analyse durchgeführt wird, indem das virtuelle, dreidimensionale Tomographiemodell (8) mittels eines neuronalen Netzes oder eines tiefen neuronalen Netzes verarbeitet wird, um zu bestimmen, ob die untersuchten eine oder mehreren vorgegebenen Eigenschaften vorgegebenen Referenzeigenschaften entsprechen oder nicht, und wobei, für jede zu untersuchende vorgegebene Eigenschaft, das neuronale Netz beziehungsweise das tiefe neuronale Netz mit einer ersten Vielzahl virtueller, dreidimensionaler Tomographiemodelle von Produkten (2) derselben Art, bei denen die vorgegebenen Eigenschaften den vorgegebenen Referenzeigenschaften entsprechen, und mit einer zweiten Vielzahl virtueller, dreidimensionaler Tomographiemodelle von Produkten (2) derselben Art, bei denen die vorgegebenen Eigenschaften nicht den vorgegebenen Referenzeigenschaften entsprechen, trainiert wurde.

## Revendications

1. Un appareil de tomographie industriel (1) comprenant :
un dispositif de transport (3), configuré pour alimenter à une zone de balayage (4), et respectivement retirer de la zone de balayage (4), des produits (2) à examiner qui sont de type connu, comprennent une pluralité de pièces primaires et ont des caractéristiques connues qui reflètent des spécifications de production et/ou d'emballage ;
un dispositif de balayage tomographique (7) configuré pour effectuer des balayages tomographiques d'un produit (2) placé dans la zone de balayage (4) ; et
une unité électronique de traitement opérationnellement reliée au dispositif de balayage tomographique (7) pour recevoir de celui-ci des données numériques sur les balayages tomographiques effectués par le dispositif de balayage tomographique (7), et programmée pour générer, en utilisant ces données numériques, un modèle tomographique tridimensionnel (8) virtuel du produit (2) balayé par le dispositif de balayage tomographique (7), le modèle tomographique tridimensionnel (8) virtuel étant constitué d'une pluralité de voxels dont chacun à sa propre densité constante ;
**caractérisé en ce que** :
l'unité électronique de traitement est également programmée pour effectuer par elle-même une procédure d'examen informatisée complète sur le modèle tomographique tridimensionnel (8) virtuel, afin d'examiner la composition du produit (2) balayé par le dispositif de balayage tomographique (7) ; et
**en ce que**, lors de la procédure d'examen informatisée de la composition du produit (2), l'unité électronique de traitement est programmée pour examiner le modèle tomographique tridimensionnel (8) virtuel et pour évaluer au moins une des propriétés prédéfinies suivantes du produit (2) : la position d'une ou plusieurs pièces primaires à l'intérieur du produit (2) et le nombre total de pièces primaires d'un même type à l'intérieur du produit (2).

2. L'appareil de tomographie industriel (1) selon la revendication 1, dans lequel l'unité électronique de traitement est en outre programmée pour classifier par elle-même le produit (2), à la fin de la procédure d'examen, comme étant conforme ou non conforme sur la base des propriétés prédéfinies évaluées lors de la procédure d'examen informatisée.

3. L'appareil de tomographie industriel (1) selon la revendication 1 ou 2, dans lequel la procédure d'examen que l'unité électronique de traitement est programmée pour effectuer sur chaque produit (2) de type connu, comprend les étapes opérationnelles suivantes :
une étape de segmentation, au cours de laquelle, dans le modèle tomographique tridimensionnel (8), l'unité électronique de traitement identifie une pluralité de volumes primaires (9), dont chacun est constitué de voxels adjacents qui ont des densités situées dans une même plage de densités prédéfinie, et dont chacun correspond à une des pièces primaires qui constituent le produit (2) réel ;
une étape d'évaluation, au cours de laquelle l'unité électronique de traitement évalue une ou plusieurs propriétés prédéfinies d'un ou plusieurs volumes primaires (9) ainsi identifiés ;
une étape de comparaison, au cours de laquelle l'unité électronique de traitement compare les propriétés prédéfinies évaluées lors de l'étape d'évaluation avec des valeurs de référence correspondantes enregistrées dans une mémoire électronique, afin de vérifier s'il y a une concordance ; et
une étape de classification, au cours de laquelle l'unité électronique de traitement fournit une indication signalant si l'étape de comparaison a identifié ou non une concordance pour les propriétés prédéfinies évaluées.

4. L'appareil de tomographie industriel (1) selon la revendication 3, dans lequel, au cours de l'étape de segmentation, chaque plage de densités prédéfinie correspond à une plage de densités connue d'une des pièces primaires qui constituent le produit (2).

5. L'appareil de tomographie industriel (1) selon la revendication 3 ou 4, dans lequel, au cours de l'étape de segmentation, l'unité électronique de traitement identifie chaque volume primaire (9) en sélectionnant, pour ce volume primaire (9), tous les voxels adjacents qui ont des densités situées dans une plage de densités prédéfinie.

6. L'appareil de tomographie industriel (1) selon la revendication 3 ou 4, dans lequel, au cours de l'étape de segmentation, pour une ou plusieurs plages de densités prédéfinies, l'unité électronique de traitement sélectionne d'abord tous les voxels adjacents qui ont des densités situées dans cette plage de densités prédéfinie en identifiant ainsi un volume secondaire, puis divise ce volume secondaire en une pluralité de volumes primaires (9), en utilisant des informations enregistrées sur des aspects connus des pièces primaires auxquels les volumes primaires (9) doivent correspondre.

7. L'appareil de tomographie industriel (1) selon l'une quelconque des revendications de 3 à 6, dans lequel les propriétés prédéfinies qui font l'objet des étapes d'évaluation et de comparaison sont constituées par au moins l'une des suivantes : la position d'un ou plusieurs volumes primaires (9) à l'intérieur du produit (2) et le nombre total de volumes primaires (9) d'un même type à l'intérieur du produit (2).

8. L'appareil de tomographie industriel (1) selon l'une quelconque des revendications de 3 à 7, dans lequel l'unité électronique de traitement comprend un réseau neuronal ou un réseau neuronal profond, programmé pour effectuer simultanément les étapes d'évaluation et de comparaison en traitant le modèle tomographique tridimensionnel (8) virtuel généré lors de l'étape de segmentation, et dans lequel, pour chaque propriété prédéfinie à examiner, le réseau neuronal, ou respectivement le réseau neuronal profond, a été entraîné avec une première pluralité de modèles tomographiques tridimensionnels virtuels de produits (2) du même type, traités avec l'étape de segmentation, pour lesquels les propriétés prédéfinies correspondent aux propriétés prédéfinies de référence, et avec une deuxième pluralité de modèles tomographiques tridimensionnels virtuels de produits (2) du même type, traités avec l'étape de segmentation, pour lesquels les propriétés prédéfinies ne correspondent pas aux propriétés prédéfinies de référence.

9. L'appareil de tomographie industriel (1) selon la revendication 1 ou 2, dans lequel l'unité électronique de traitement comprend un réseau neuronal ou un réseau neuronal profond, qui effectuent toute la procédure d'examen et qui sont programmés pour traiter le modèle tomographique tridimensionnel (8) virtuel afin d'établir si lesdites une ou plusieurs propriétés prédéfinies examinées correspondent ou non à des propriétés prédéfinies de référence, et dans lequel, pour chaque propriété prédéfinie à examiner, le réseau neuronal, ou respectivement le réseau neuronal profond, a été entraîné avec une première pluralité de modèles tomographiques tridimensionnels virtuels de produits (2) du même type pour lesquels les propriétés prédéfinies correspondent aux propriétés prédéfinies de référence, et avec une deuxième pluralité de modèles tomographiques tridimensionnels virtuels de produits (2) du même type pour lesquels les propriétés prédéfinies ne correspondent pas aux propriétés prédéfinies de référence.

10. Une installation (14) pour la production industrielle de produits (2) comprenant une pluralité de pièces primaires et ayant des caractéristiques connues qui reflètent des spécifications de production et/ou d'emballage, comprenant :
une ligne de production (15) le long de laquelle une ou plusieurs stations (16) de préparation du produit (2) sont montées l'une à la suite de l'autre ;
au moins un appareil de tomographie industriel (1) selon l'une quelconque des revendications de 1 à 9, qui est monté le long de la ligne de production (15) en aval d'au moins une station (16) de préparation du produit (2), et qui est configuré pour le contrôle systématique en ligne de la composition de tous les produits (2) fabriqués par l'installation (14) et pour classifier, à la fin de la procédure d'examen informatisée, chaque produit (2) comme étant conforme ou non conforme sur la base des propriétés prédéfinies évaluées lors de la procédure d'examen informatisée ; et
une station d'éjection (17) montée le long de la ligne de production (15) en aval de l'appareil de tomographie industriel (1) ;
dans laquelle l'unité électronique de traitement dudit au moins un appareil de tomographie industriel (1) est reliée à la station d'éjection (17) pour communiquer à la station d'éjection (17) quels produits (2) ont été classifiés comme étant non conformes, et la station d'éjection (17) est configurée pour expulser de la ligne de production (15) des produits (2) arrivant au niveau de la station d'éjection qui ont été classifiés comme étant non conformes par l'appareil de tomographie industriel (1).

11. L'installation (14) selon la revendication 10 quand dépendant de la revendication 3, dans laquelle, à la fin de la procédure d'examen, l'unité électronique de traitement classifie un produit (2) comme étant non conforme lorsque l'étape de comparaison a identifié une ou plusieurs non-concordances et/ou lorsque l'étape de comparaison a identifié, dans le cas d'une non-concordance, une différence entre les propriétés prédéfinies évaluées et les valeurs de référence correspondantes qui est supérieure à une valeur de tolérance maximale.

12. L'installation (14) selon la revendication 11, dans laquelle l'installation (14) comprend un système de contrôle relié à l'unité électronique de traitement, et dans laquelle le système de contrôle est configuré pour modifier des paramètres de fonctionnement desdites une ou plusieurs stations de préparation (16), lorsque l'unité électronique de traitement fournit, pour une pluralité de produits (2) distincts, une même indication de non-concordance d'une ou plusieurs propriétés prédéfinies évaluées.

13. L'installation (14) selon la revendication 12, dans laquelle le système de contrôle est relié à l'unité électronique de traitement afin de recevoir de celle-ci l'indication signalant si l'étape de comparaison a identifié ou non une concordance pour les propriétés prédéfinies évaluées.

14. Un procédé pour contrôler la composition de produits (2) industriels qui comprennent une pluralité de pièces primaires et ont des caractéristiques connues, dans lequel les caractéristiques connues reflètent des spécifications de production et/ou d'emballage, le procédé comprenant les étapes opérationnelles suivantes :
une étape de balayage tomographique, au cours de laquelle, au moyen d'un appareil de tomographie (1) inséré dans une ligne de production (15), un balayage tomographique informatisé du produit (2) est effectué et un modèle tomographique tridimensionnel (8) virtuel de celui-ci est obtenu, constitué d'une pluralité de voxels, dont chacun a sa propre densité constante ; et
une étape d'analyse informatisée du modèle tomographique tridimensionnel (8) virtuel entièrement exécutée par une unité électronique de traitement programmée pour exécuter une telle étape d'analyse informatisée, au cours de laquelle l'unité électronique de traitement évalue par elle-même des propriétés prédéfinies des pièces primaires du produit (2) auquel le modèle tomographique tridimensionnel (8) virtuel correspond, choisies entre la position d'une ou plusieurs pièces primaires à l'intérieur du produit (2) et le nombre total de pièces primaires d'un même type à l'intérieur du produit (2).

15. Le procédé selon la revendication 14, dans lequel les produits (2) industriels sont des produits alimentaires.

16. Le procédé selon la revendication 14 ou 15, dans lequel, l'étape d'analyse informatisée comprend :
une étape de segmentation, au cours de laquelle, dans le modèle tomographique tridimensionnel (8), une pluralité de volumes primaires (9) sont identifiés, dont chacun est constitué de voxels adjacents qui ont des densités situées dans une même plage de densités prédéfinie, et dont chacun correspond à une des pièces primaires qui constituent le produit (2) réel ;
une étape d'évaluation, au cours de laquelle sont évaluées une ou plusieurs propriétés prédéfinies d'un ou plusieurs volumes primaires (9) identifiés lors de l'étape de segmentation ;
une étape de comparaison, dans laquelle les propriétés prédéfinies évaluées lors de l'étape d'évaluation sont comparées avec des valeurs de référence correspondantes enregistrées dans une mémoire électronique, afin de vérifier s'il y a une concordance ; et
une étape de classification, au cours de laquelle une indication est fournie signalant si l'étape de comparaison a identifié ou non une concordance pour les propriétés prédéfinies évaluées.

17. Le procédé selon la revendication 16, dans lequel, au cours de l'étape de segmentation, chaque plage de densités prédéfinie correspond à une plage de densités connue d'une des pièces primaires qui constituent le produit (2).

18. Le procédé selon la revendication 16 ou 17, dans lequel, au cours de l'étape de segmentation, chaque volume primaire (9) est identifié en sélectionnant, pour ce volume primaire (9), tous les voxels adjacents qui ont des densités situées dans une plage de densités prédéfinie.

19. Le procédé selon la revendication 16 ou 17, dans lequel, au cours de l'étape de segmentation, pour une ou plusieurs plages de densités prédéfinies, tout d'abord tous les voxels adjacents qui ont des densités situées dans cette plage de densités prédéfinie sont sélectionnés, identifiant ainsi un volume secondaire, puis ce volume secondaire est divisé en une pluralité de volumes primaires (9), en utilisant des informations enregistrées sur des aspects connus des pièces primaires auxquels les volumes primaires (9) doivent correspondre.

20. Le procédé selon l'une quelconque des revendications de 16 à 19, dans lequel les propriétés prédéfinies qui font l'objet des étapes d'évaluation et de comparaison sont constituées par au moins la position d'un ou plusieurs volumes primaires (9) à l'intérieur du produit (2) et le nombre total de volumes primaires (9) d'un même type à l'intérieur du produit (2).

21. Le procédé selon l'une quelconque des revendications de 16 à 20, dans lequel les étapes d'évaluation et de comparaison sont effectuées en traitant le modèle tomographique tridimensionnel (8) virtuel généré lors de l'étape de segmentation avec un réseau neuronal ou un réseau neuronal profond, et dans lequel, pour chaque propriété prédéfinie à examiner, le réseau neuronal, ou respectivement le réseau neuronal profond, a été entraîné avec une première pluralité de modèles tomographiques tridimensionnels virtuels de produits (2) du même type, traités avec l'étape de segmentation, pour lesquels les propriétés prédéfinies correspondent aux propriétés prédéfinies de référence, et avec une deuxième pluralité de modèles tomographiques tridimensionnels virtuels de produits (2) du même type, traités avec l'étape de segmentation, pour lesquels les propriétés prédéfinies ne correspondent pas aux propriétés prédéfinies de référence.

22. Le procédé selon l'une quelconque des revendications de 14 à 15, dans lequel toute l'étape d'analyse informatisée est effectuée en traitant le modèle tomographique tridimensionnel (8) virtuel au moyen d'un réseau neuronal ou d'un réseau neuronal profond, afin d'établir si lesdites une ou plusieurs propriétés prédéfinies examinées correspondent ou non à des propriétés prédéfinies de référence, et dans lequel, pour chaque propriété prédéfinie à examiner, le réseau neuronal, ou respectivement le réseau neuronal profond, a été entraîné avec une première pluralité de modèles tomographiques tridimensionnels virtuels de produits (2) du même type pour lesquels les propriétés prédéfinies correspondent aux propriétés prédéfinies de référence, et avec une deuxième pluralité de modèles tomographiques tridimensionnels virtuels de produits (2) du même type pour lesquels les propriétés prédéfinies ne correspondent pas aux propriétés prédéfinies de référence.
